**Europäisches Patentamt**

**European Patent Office**

**Office européen des brevets**

(11) Publication number: **0 102 243**

**B1**

(12) **EUROPEAN PATENT SPECIFICATION**

(45) Date of publication of patent specification: **30.12.86**

(51) Int. Cl.⁴: **C 05 G 1/00**

(21) Application number: **83304942.2**

(22) Date of filing: **26.08.83**

(54) **Process for enhancing or fertilizing the soil using organic waste derived granulate.**

(30) Priority: **30.08.82 US 413024**

(43) Date of publication of application:
**07.03.84 Bulletin 84/10**

(45) Publication of the grant of the patent:
**30.12.86 Bulletin 86/52**

(84) Designated Contracting States:
**BE DE FR GB IT NL**

(56) References cited:
**DE-B-2 450 057**
**DE-C- 868 912**
**FR-A- 381 975**
**FR-A-2 307 776**
**GB-A-1 070 357**
**US-A-3 824 091**
**US-A-4 067 712**
**US-A-4 297 122**

**A. JARRIGE: "Les cendres volantes", 1971,
pages 201-202,214, Editions Eyrolles, Paris, FR.**

(73) Proprietor: **CHEMFIX TECHNOLOGIES, INC.
1675 Airline Highway P.O. Box 1572
Kenner, LA 70063 (US)**

(72) Inventor: **Buzbee III, Hubert Hudson
4132 B Loire Drive
Kenner Louisiana (US)**

(74) Representative: **Warren, Anthony Robert et al
BARON & WARREN 18 South End Kensington
London W8 5BU (GB)**

(56) References cited:
**CHEMICAL ABSTRACTS, vol. 97, no. 1, July
1982, page 525, no. 5316v, Columbus, Ohio,
USA**

Courier Press, Leamington Spa, England.

## Description

The present invention relates to a process for fertilizing the soil using a solid granular agent formed from organic wastes. More particularly, it relates to a granular agent formed by mixing organic waste with an alkali metal silicate and a setting agent which is useful as a fertilizer or soil enhancing agent.

There have been efforts to convert human organic wastes into a form useful as a fertilizer which is aesthetically compatible and not pathogenic. For instance, U.S. patent No. 151,905 of 1864 discloses a process for preparing night-soil for use as a fertilizer wherein the night-soil is mixed with hydraulic cement or calcined plaster and optionally sulfuric acid and formed into bricks which can be ground into powder.

For various technical and economic reasons, the processes which have been generated by these prior efforts have not been broadly adopted and presently there is no commercially suitable practice for preparing organic wastes for use as a fertilizer or a soil enhancing agent. In order to be commercially suitable, the wastes must be deodorized and rendered non-pathogenic. In addition, for the fertilizer to have broad applications, it should be in a form which is readily packaged, easily spread, and which the user is not adverse to handling. While these qualities may have been attainable in some prior waste preparations, they have not been available through a process suitable for commercial application.

Thus, there is a need for a commercially useful process for processing organic wastes for use as a fertilizer or soil enhancing agent.

According to one aspect of the present invention there is provided a process for fertilizing the soil wherein a soil enhancing agent is spread upon the soil characterised in that said soil enhancing agent is prepared by mixing organic waste with an alkali metal silicate and a setting agent thereof, in proportions such that they react with said waste to form a friable, solid product, and grinding said product to a size suitable for application to the soil.

According to another aspect of the present invention there is provided an agent for use as a fertilizer prepared by mixing organic waste with an alkali metal silicate and a setting agent therefor, the proportions of said silicate and said setting agent being such that they react to form a friable, solid product, and grinding said product to a size suitable for spreading over the soil.

The product of the present invention is a granular agent which is easily and readily handled and is useful as a fertilizer or soil enhancing agent.

The silicate and the setting agent are used in proportions which cause the mixture to undergo consolidation and solidification and form a solid friable mass which is then ground to produce the fertilizer material of the invention. Various alkali metal silicates and setting agents can be used in the process of the invention, but economical considerations generally dictate that sodium silicate be used. Portland Cement is a convenient setting agent for the silicate because it is readily available in large quantities and is relatively inexpensive. The relative proportions of silicate, setting agent and waste will depend on the particular materials used and on the nature of the waste. In most cases, the silicate is used in an amount of about 3 to 8 parts by volume per 100 parts by volume waste and the setting agent is usually used in a ratio of 5 to 20 parts by weight per 100 parts by weight waste.

Thus, in accordance with the present invention soil is fertilized by a process of mixing an organic waste with an alkali metal silicate and a setting agent in proportions such that they react and form a friable solid product, grinding the product to a size suitable for spreading over the soil, and spreading the product on the soil. In some cases the waste derived material may not have all the nutrients required by the soil in that area. In such cases, the agent of the present invention may be supplemented with other soil nutrients such as phosphates, nitrogen, and potassium values.

The present invention also provides a granulate for use as a fertilizer prepared in accordance with the above process.

The term "organic waste" includes raw human wastes and sludges from various organic sources. The organic waste of preference is a mixture of so-called "waste-activated sludge", which is the activated sludge obtained from the aeration field of a waste water treatment facility and "primary sludge" from the settling of solids as the waste water first enters the waste water treatment plant. The ratio of waste activated sludge to primary sludge is not critical.

Any alkali metal silicate can be used in the present invention including sodium silicate and potassium silicate. Sodium silicate is preferred because it is the least expensive and is generally available in the quantities required. On the other hand, potassium silicate and lithium silicate are chemically suitable but expensive and more difficult to obtain. Sodium silicate is ordinarily used in its commercial liquid form.

A variety of setting agents are applicable to the practice of the invention. In general, acids or acidic materials act prompty to cause gelation, or setting of the silicate. If the setting agent is to be added to the mixture, it should be polyvalent metal compound; that is, compositions containing polyvalent metal ions. It has been found that setting agents which are only slightly soluble or compositions containing only small amounts of soluble setting agents are most desirable for commercial use with this process. Such setting agents are typified by such pozzolanic compounds as Portland cement, lime, gypsum, calcium carbonate, kiln dust, and flyash which are the cheapest and most available. Aluminum, iron, magnesium, nickel, chromium, manganese and copper compounds can also be used, but they are more expensive and difficult to obtain. An objection to calcium chloride is that it may react more rapidly than desired because of its high solubility.

On the other hand, Portland cement, lime, gypsum, cement kiln dust, and fly ash have a quick gel forming reaction, which is highly desirable, and then continue with a handening reaction over a period of time.

The properties of Portland cement as a setting agent are excellent and it is economical and readily available in large quantities at low prices. Also, its reaction rate with the silicate is easily controllable. Thus, Portland cement is the setting agent of preference.

In accordance with this invention, commercial or domestic wastes are mixed with an alkali metal silicate which, in the presence of a setting agent therefor, causes the mixture to undergo consolidation and solidification. Mixing is usually performed in a pug mill. Reaction between the silicate and the setting agent will result in setting and consolidation of the mixture.

The proportions in which the waste, silicate and setting agent are present in the mixture will depend in large part upon the composition of the waste, the specific setting agent and silicate used, and the speed of reaction required. The proportions are adjusted to provide a solid, friable mass which is economic to manufacture and can be readily ground to produce the fertilizer. In most cases, the silicate is used in an amount of 3 to 8 volumetric parts per 100 parts waste and the setting agent is used in an amount of 5 to 20 parts by weight per 100 parts waste. The amount of silicate and setting agent used is principally determined by the percent solids content of the waste, the presence of reactive metals and the amount of organic material in the waste. As the percent solids decreases, the amount of setting agent and silicate required increases, however, if reactive metals are present in the waste, less setting is required to consolidate it. The organic materials tend to inhibit the setting reaction and, therefore, as their content increases more silicate and setting agent are required. If the waste is relatively dry, it may be necessary to add water as the materials are mixed. Another factor of importance is gel time. For practical applications it is often desirable to have initial gelation occur within minutes so that the waste will not flow uncontrollably. Where the waste is fairly acidic, the amount of setting agent can be reduced. In a preferred embodiment, a mixture of waste activated and primary sludge is mixed with 4 to 6 parts by volume per 100 volumetric parts waste of silicate and 8 to 15 parts by weight per 100 parts by weight waste of Portland cement.

The interactions between the wastes, the silicate and setting agent are complex. Many different interactions occur. The silicate reacts with a number of organics in the waste as well as with certain reactive components of the setting agent such as the calcium ion of Portland cement, lime, gypsum and calcium chloride. The setting agent also undergoes several reactions with water. A feature of the invention is that chemical fixation of biodegradable waste avoids the development of objectionable degradation products that might form objectionable odors or be harmful to health.

Solid organic wastes as well as liquid and semi-liquid wastes, such as sludges and slurries, are suited to the practice of the invention. In the case of solid wastes, they are chopped, shredded, crushed or otherwise subdivided. Generally, the wastes are received in a highly viscous state and it is necessary to use a combination of mixing and pumping to thixotropically reduce their viscosity to a level suitable for processing. One convenient means of treating the wastes is to first pass them through a pug mill where the churning action of the mill reduces their viscosity to a first level and the wastes from the pug mill to feed an elongated holding tank wherein the wastes are continuously circulated by a series of pumps as they pass along the tank whereby their viscosity is further reduced to a level suitable for forming the invention fertilizer. Thus prepared, the waste, whether a single-waste type or a mixture of types, is mixed with silicate. If the subdivided waste does not naturally contain a silicate setting agent, or if such an agent is present but in an amount insufficient to effect the desired consolidation, a setting agent is added to the mixture of waste and silicate. Mixing with the silicate and setting agent is preferably carried out in a pug mill wherein the wastes are agitated as the silicate and setting agent are added. The flow rates of the wastes, the silicate and the setting agent to the pug mill are preferably continuously and independently variable such that they can be adjusted for variations in the composition and consistency of the sludge to produce a friable product of consistent high quality. For thorough uniform mixing, the pug mill is preferably operated at a relatively high speed.

For practical applications it is important that the solidification chemicals be mixed with the waste and then conveyed, sometimes many hundreds of feet, to the disposal area with minimum energy. Conveyance of the treated waste material is normally by pumping, but the utilization of other methods is possible. This requires good fluid characteristics of the waste, which is achieved with the silicate system. In the pug mill the composition of the fertilizer or soil enhancing agent can be augmented by the addition of other nutrient values in a known manner. For example, a balanced N-P-K fertilizer can be obtained by the addition of potassium, phosphate and nitrogen values.

After leaving the pug mill the mix is pumped to a temporary containment cell for solidification. After 4 to 6 days, the material is ground to size suitable for spreading on the soil. In general, particulates ranging from 0.5 to 4.0 mm are convenient. Grinding may be carried out using a conventional grinding apparatus. Alternatively, the product can be pelletized.

In accordance with the fertilization process of the invention, the granulate obtained as above is spread onto the soil. The granulate may be spread onto the surface of the soil or mixed into the soil by plowing.

**Claims**

1. A process for fertilizing the soil wherein a soil enhancing agent is spread upon the soil characterised in that said soil enhancing agent is prepared by mixing organic waste with an alkali metal silicate and a setting agent therefor, in proportions such that they react with said waste to form, a friable, solid product, and grinding said product to a size suitable for application to the soil.

2. A process as defined in claim 1, wherein said alkali metal silicate is sodium silicate.

3. A process as defined in claim 1 or 2, wherein said setting agent is selected from Portland Cement, gypsum, lime, fly ash, kiln dust, and calcium chloride.

4. A process as defined in claim 1, 2 or 3, wherein said waste material is a mixture of waste activated and primary sludge.

5. A process as defined in any preceding claim, wherein nitrogen, phosphate and/or potassium values are added thereto.

6. An agent for use as a fertilizer prepared by mixing organic waste with an alkali metal silicate and a setting agent therefor, the proportions of said silicate and said setting agent being such that they react to form a friable, solid product, and grinding said product to a size suitable for spreading over the soil.

7. An agent as defined in claim 6, wherein said alkali metal silicate is sodium silicate.

8. An agent as defined in claim 6 or 7, wherein said setting agent is selected from Portland Cement, gypsum, lime, fly ash, kiln dust, and calcium chloride.

9. An agent as defined in claim 6, 7 or 8, wherein said organic waste material is a mixture of waste activated and primary sludge.

10. An agent as defined in any of claims 6 to 10, wherein nitrogen, phosphate, and/or potassium values are added thereto.

**Patentansprüche**

1. Verfahren zum Düngen des Erdbodens, bei dem ein Bodenanreicherungsmittel auf dem Erdboden verteilt wird, dadurch gekennzeichnet, daß das Bodenanreicherungsmittel durch Mischen eines organischen Abfallstoffes mit einem alkalischen Metallsilikat und mit einem Abbindemittel dafür in solchen Verhältnissen hergestellt wird, daß sie mit dem Abfallstoff reagieren, um ein brechbares Festprodukt zu bilden, und daß das Festprodukt in eine für die Bodenanwendung geeignete Form granuliert wird.

2. Verfahren nach Anspruch 1, dadurch gekennzeichnet, daß das alkalische Metallsilikat ein Natriumsilikat ist.

3. Verfahren nach Anspruch 1 oder 2, dadurch gekennzeichnet, daß das Abbindemittel aus Portlandzement, Gips, Kalk, Flugasche, Trockenstaub und Kalziumchlorid ausgewählt wird.

4. Verfahren nach Anspruch 1, 2 oder 3, dadurch gekennzeichnet, daß das Abfallstoffmaterial ein Gemisch aus Abfallstoff, aufbereitetem Schlamm und primären Schlamm ist.

5. Verfahren nach jedem vorangehenden Anspruch, dadurch gekennzeichnet, daß Stickstoff-, Phosphat- und/oder Kalimengen hinzugefügt werden.

6. Mittel zur Verwendung als Dünger, das durch Mischen eines organischen Abfallstoffes mit einem alkalischen Metallsilikat und mit einem Abbindemittel dafür hergestellt ist, wobei die Verhältnisse des Silikates und des Abbindemittels derart sind, daß sie zur Bildung eines brechbaren Festproduktes reagieren, und daß das Festprodukt in eine für die Bodenbearbeitung geeignete Form granuliert ist.

7. Düngemittel nach Anspruch 6, dadurch gekennzeichnet, daß das alkalische Metallsilikat eine Natriumsilikat ist.

8. Düngemittel nach Anspruch 6 oder 7, dadurch gekennzeichnet, daß das Abbindemittel aus Portlandzement, Gips, Kalk, Flugasche, Trockenstaub und Kalziumchlorid ausgewählt ist.

9. Düngemittel nach Anspruch 6, 7 oder 8, dadurch gekennzeichnet, daß das Abfallstoffmaterial aus Abfallstoff, aus aufbereitetem und aus primären Schlamm besteht.

10. Düngemittel nach jedem der Ansprüche 6 bis 9, dadurch gekennzeichnet, daß Stickstoff-, Phosphat- und/oder Kalimengen zugefügt sind.

**Revendications**

1. Procédé de fertilisation du sol dans lequel un agent d'enrichissement du sol est répandu sur le sol, caractérisé en ce que ledit agent d'enrichissement du sol est préparé par le mélange de déchets organiques, d'un silicate métallique alcalin et d'un agent fixateur pour cela, dans des proportions telles qu'ils réagissent avec lesdits déchets afin de constituer un produit solide et friable, et par le broyage dudit produit dans le but d'obtenir une taille de particule qui convienne à l'application au sol.

2. Procédé selon la revendication 1, caractérisé en ce que le silicate métallique alcalin est du silicate de sodium.

3. Procédé selon l'une des revendications 1 ou 2, caractérisé en ce que l'agent fixateur est sélectionné parmi le ciment de Portland, le gypse, la chaux, les escarbilles, la poussière de four et le chlorure de calcium.

4. Procédé selon l'une des revendications 1, 2 ou 3, caractérisé en ce que les déchets se composent d'un mélange de boue activée et de boue primaire.

5. Procédé selon l'une des revendications précédentes, caractérisé en ce que des quantités d'azote, de phosphate et/ou de potassium y sont ajoutées.

6. Agent fertilisant préparé par le mélange de déchets organiques, d'un silicate métallique alcalin et d'un agent fixateur pour cela, les proportions dudit silicate et dudit agent fixateur étant telles qu'ils réagissent de manière à former un produit solide et friable, et par le broyage dudit produit dans le but d'obtenir une taille de particule qui convienne à l'application au sol.

7. Agent selon la revendication 6, caractérisé en ce que le silicate métallique alcalin est du silicate de sodium.

8. Agent selon l'une des revendications 6 ou 7, caractérisé en ce que l'agent fixateur est sélectionné parmi le ciment de Portland, le gypse, le chaux, les escarbilles, la poussière de four et le chlorure de calcium.

9. Agent selon l'une des revendications 6, 7 ou 8, caractérisé en ce que les déchets se composent d'un mélange de boue activée et de boue primaire.

10. Agent selon l'une des revendications 6 à 10, caractérisé en ce que des quantités d'azote, de phosphate et/ou de potassium y sont ajoutées.